(19) Europäisches Patentamt
European Patent Office
Office européen des brevets

(11) EP 0 642 307 B1

## (12) EUROPEAN PATENT SPECIFICATION

(45) Date of publication and mention
of the grant of the patent:
**07.01.1998 Bulletin 1998/02**

(21) Application number: **93912667.8**

(22) Date of filing: **26.05.1993**

(51) Int. Cl.$^6$: **A23J 3/34**

(86) International application number:
**PCT/DK93/00182**

(87) International publication number:
**WO 93/24020 (09.12.1993 Gazette 1993/29)**

(54) **METHOD FOR PRODUCTION OF A WHEY PROTEIN HYDROLYZATE AND A WHEY PROTEIN HYDROLYZATE**

VERFAHREN ZUR HERSTELLUNG EINES MOLKENPROTEINHYDROLYSATES UND HYDROLYSAT

HYDROLYZAT DE PROTEINE DU PETIT LAIT ET PROCEDE POUR SA PRODUCTION

(84) Designated Contracting States:
**AT BE CH DE DK ES FR GB GR IE IT LI LU NL PT SE**

(30) Priority: **27.05.1992 DK 71292**

(43) Date of publication of application:
**15.03.1995 Bulletin 1995/11**

(73) Proprietor: **NOVO NORDISK A/S**
**2880 Bagsvaerd (DK)**

(72) Inventors:
• **NIELSEN, Per Munk**
  **DK-3400 Hillerod (DK)**
• **HVASS, Peter**
  **DK-2800 Lyngby (DK)**

(56) References cited:
| EP-A- 0 065 663 | EP-A- 0 274 946 |
| WO-A-91/10369 | WO-A-91/13554 |
| WO-A-92/11771 | WO-A-92/21248 |
| WO-A-93/04593 | US-A- 4 427 658 |

EP 0 642 307 B1

## Description

The invention comprises a method for production of a whey protein hydrolyzate and the thus produced whey protein hydrolyzate.

Many methods for production of a protein hydrolyzate with good organoleptic properties can be carried out with a low yield only. Also, a disadvantage in regard to the prior art whey protein hydrolyzates is the fact that the allergenicity thereof is open to improvement. Thus, it is the purpose of the invention to indicate a method for production of a whey protein hydrolyzate with reduced allergenicity and with good organoleptic properties, which can be carried out with a relatively high yield.

Surprisingly, according to the invention it has been found that a selection of a specified starting material in combination with a non-pH-stat hydrolysis provides a process for production of a low allergenicity and organoleptically acceptable product in high yield.

Thus, the method according to the invention for production of a whey protein hydrolyzate is characterized by the fact

1) that whey protein obtained from production of acid precipitated casein is mixed with water to a slurry with a protein content up to 20%, preferably up to 12%,
2) that a heat treatment to a temperature above 60°C is carried out,
3) that the mixture from step 2) is proteolytically hydrolyzed by means of at least one protease, by means of a non-pH-stat method to a DH of between 15 and 35%, and
4) that the hydrolysis is terminated by inactivation of the enzyme(s), and further that the mixture from step 3) or 4) is separated on an ultrafiltration/microfiltration unit with cut-off value above 10,000, preferably above 50,000, the permeate constituting the protein hydrolyzate.

A whey protein hydrolyzate with a composition similar to the whey protein hydrolyzate produced by means of the method according to the invention is described in US 4,427,658.

Also, EP 226221 describes a whey protein hydrolyzate, which however, in contradistinction to the whey protein hydrolyzate produced by means of the method according to the invention is free from lactose and is produced by means of the pH-stat techniques.

Also, US 4,293,571, EP 321603 and EP 322589 describe a whey protein hydrolyzate, which is produced by hydrolysis with subsequent heat treatment, in contradistinction to the whey protein hydrolyzate produced by means of the method according to the invention, i.e. by means of heat treatment with subsequent hydrolysis. The high values of the degree of hydrolysis which can be obtained according to the invention, cannot be obtained with the prior art methods.

EP 65663 describes a whey protein hydrolyzate, which is produced without heat treatment before the hydrolysis, in contradistinction to the method according to the invention.

In Research Disclosure, August 1981 no. 20826 a method similar to the method according to the invention is described. However, the prior art method is restricted to blood as the starting material, and also, the prior art method is performed by means of the pH-stat method.

To the best of the applicant's knowledge, all prior art methods for production of a whey protein hydrolyzate give rise to a whey protein hydrolyzate with an unacceptable taste and a relatively high allergenicity. The whey protein hydrolyzate according to the invention has a markedly agreeable taste and a remarkable low allergenicity. Also, in relation to many of the prior art methods for production of whey protein hydrolyzate the end product is obtained in a low yield and/or at high production cost.

A preferred embodiment of the method according to the invention comprises that the slurry in step 1) has a protein content of 7-12%. In this manner the equipment is utilized optimally, and also, the viscosity is not too high for handling.

A preferred embodiment of the method according to the invention comprises that the pH adjustment in step 3) is carried out by means of $Ca(OH)_2$ and/or KOH. In this manner a better taste is obtained, and also, a favorable mineral distribution in the final product is obtained. Also, sodium carbonate or sodium phosphate can be used for pH adjustment in order to precipitate the $Ca^{++}$ in the raw whey protein product.

A preferred embodiment of the method according to the invention comprises that the hydrolysis in step 3) is carried out to a DH of between 20-35%. In this manner a product with excellent organoleptic properties is obtained.

A preferred embodiment of the method according to the invention comprises that a protease producible by means of *B. licheniformis*, preferably Alcalase®, and/or a protease producible by means of *B. subtilis*, preferably Neutrase ®, and/or trypsin is used as proteolytic enzyme(s). It is especially preferred to use Alcalase® (with a high pH optimum) first, and then Neutrase® (with a lower pH optimum). This method is especially well suited to the non-pH-stat-method used according to the invention.

A preferred embodiment of the method according to the invention comprises that the inactivation of the enzyme(s) (step 4)) is carried out by heat treatment. This inactivation is especially well suited in case the pH of the final protein hydrolyzate is supposed to be relatively high (around neutrality).

A preferred embodiment of the method according to the invention comprises that the inactivation of the enzyme(s) (step 4)) is carried out by acid treatment. This inactivation is especially well suited in case the pH of the final protein hydrolyzate is supposed to be relatively low (acidic).

A preferred embodiment of the method according to the invention comprises that the mixture at the end of step 3) or step 4) is treated with activated carbon for more than 5 minutes at a temperature, which is preferably between 50 and 70°C in an amount corresponding to between 1 and 5% carbon, calculated in relation to dry matter content, and that the activated carbon is removed. In this manner the flavor is improved.

A preferred embodiment of the method according to the invention comprises that after step 4) a concentration is carried out by nanofiltration/hyperfiltration/reverse osmosis at a temperature, which is preferably between 50 and 70°C and/or evaporation, whereafter the retentate is collected as the protein hydrolyzate solution. By means of the nanofiltration a desalination can be carried out by proper selection of the membrane; besides nanofiltration/hyper-filtration/reverse osmosis is an inexpensive way for removal of water. Evaporation has the advantage of obtaining a high dry matter content in the concentrate before drying.

A preferred embodiment of the method according to the invention comprises that the protein hydrolyzate solution from step 4) is spray-dried to a water content below 6.5%. In this manner a stable product is obtained, both microbially and organoleptically.

Also, the invention comprises a whey protein hydrolyzate producible by means of the method according to the invention, and characterized by the fact that it exhibits the following molecular weight (MW) distribution

|  | Weight-% |
| --- | --- |
| MW > 5000 | < 0.5 |
| 1500 < MW < 5000 | 5 - 15 |
| 500 < MW < 1500 | 40 - 60 |
| MW < 500 | 40 - 60 |

whereby the content of free amino acids < 15. Surprisingly, it has been found that in this embodiment a whey protein hydrolyzate with an extraordinary low antigenicity is obtained. Reference is made to Example 1. This extraordinary low antigenicity corresponds to a substantial reduction of the allergenicity.

Also, the invention comprises a whey protein hydrolyzate which is characterized by the fact that it is producible on the basis of a starting material which is whey from acidic precipitated casein, that it exhibits the following MW distributions.

|  | Weight-% |
| --- | --- |
| MW > 5000 | < 0.5 |
| 1500 < MW < 5000 | 5 - 15 |
| 500 < MW < 1500 | 40 - 60 |
| MW < 500 | 40 - 60 |

whereby the content of free amino acids < 15, and that it exhibits a reduction of antigenicity compared to Lacprodan 80 of at least $10^5$ times.

The MW distribution of peptides in protein hydrolyzates, as indicated above, is determined as follows.

1. Principle

The sample is diluted, filtered and injected into a liquid chromatographic system, operating in the Gel Permeation Chromatography (GPC) mode. this separation technique utilizes a liquid flow through a column filled with porous particles, having pores with a well-defined pore diameter. When a solution of peptides, having different molecular sizes passes through the column, the small peptides will be able to flow into the pores while the larger peptides will be excluded from the pores. Thus, the peptides in a solution will be separated according to molecular size (and molecular weight), as the larger peptides will be eluted faster from the column than the smaller peptides. A detector at the column outlet continuously measures the effluent. The chromatographic system is calibrated by means of peptides with known MW.

## 2. Chromatographic equipment

2.1 HPLC system consisting of
High Pressure pump, Waters M 510, Flow rate 0.7 ml/min Injector, Waters WISP M 710
Detector, Waters M 440, with wawe lenght extension to 214 nm.
2.2 GPC column, 3 x TSK G 2000 SWXL, 7.8 mm x 300 mm, connected in series and operated at ambient temperature.
2.3 Integration/data processing, Waters 820 MAXIMA SIM chromatography data system with 810/820 GPC option.

## 3. Reagents

3.1 Phosphate buffer, $NaH_2PO_4 \cdot 2H_2O$
3.2 Ammonium chloride, $NH_4Cl$
3.3 Trifluoroacetic acid (TFA), $CF_3COOH$
3.4 Acetonitrile, $CH_3CN$
3.5 Mobile phase:
0.05 M phosphate buffer / 0.5 M ammonium chloride solution containing 0.1% TFA and 25% acetonitrile

## 4. Description

4.1 Calibration
The chromatographic system is calibrated by means of injections of numerous peptide standards with known MW. The MW of each standard is plotted semilogaritmic versus the observed volume of mobile phase needed to elute the peptide from the column. By a least squares calculation, the best fitting 3rd order polynomium is calculated. This curve represents the calibration curve.

4.2 Analysis
The sample is diluted/dissolved in mobile phase to approx. 5 mg/ml. The solution is filtered through a 22 $\mu$m filter and 20 $\mu$l is used for injection into the chromatograph. The detector response versus elution volume is recorded. The recorded curve - the chromatogram - shows the actual MW distribution of the sample. To allow for calculations as to accumulated weight distribution and average MW calculations, the chromatogram is divided into small time (and elution volume) segments - each segment characterized by the elution volume and the area of the chromatogram over the time interval.

## 5. Calculation

Results are given in terms of weight and number average MW.

$$\bar{M}_w = \frac{\Sigma_i \, (A_i * M_{w,i})}{\Sigma_i \, A_i} \, , \qquad \bar{M}_n = \frac{\Sigma_i \, A_i}{\Sigma_i \, (A_i / M_{w,i})} \, , \text{ where}$$

$\overline{M}_w$     : Weight average MW

$\overline{M}_n$     : Number average MW

$A_i$     : Area of chromatogram for each segment, measured as the accumulated detector response over each time interval.

$M_{w,i}$     : The corresponding MW for each segment. The value is calculated by means of the calibration curve, using the average elution volume over the time interval.

The method according to the invention and the whey protein according to the invention will be illustrated in the following example.

## EXAMPLE 1

### Feed

The starting material is spray-dried whey protein concentrate (the commercial product Lacprodan 75CV, obtained from Danmark Protein A/S, Denmark) containing approx. 80% protein calculated as dry matter. This starting material is obtained from production of acid precipitated casein by ultrafiltration/diafiltration, neutralizing and drying.

### Mixing

The starting material is diluted with deionized water to a protein content of 8%.

### Heat treatment

Pasteurisation is carried out by heating to 85°C, holding for 5 minutes and cooling to 53°C.

### pH adjustment

pH is adjusted to 8.0 with $Ca(OH)_2$.

### Hydrolysis

Temperature 53°C.

Enzymes:  Alcalase® 2.4 L. Dosage 2.2%
Neutrase® 0.5L. Dosage 1.1%

Hydrolysis for 18 hours. Increase in osmolality was 200 mOsm/kg.

### Ultrafiltration step

The mixture is filtered by means of a Millipore Pellicon System with PTTK 30,000 NMWL membranes. Temperature 50°C.

### Inactivation

The permeate from the ultrafiltration step is heated to 85°C for 3 minutes in order to inactivate the enzymes.

### Drying

The product is freeze dried.
The MW distribution of the freeze dried product appears from the following table.

|  | Weight-% |
|---|---|
| MW > 5000 | 0.1 |
| 1500 < MW < 5000 | 6.6 |
| 500 < MW < 1500 | 47.7 |
| MW < 500 | 45.6 |

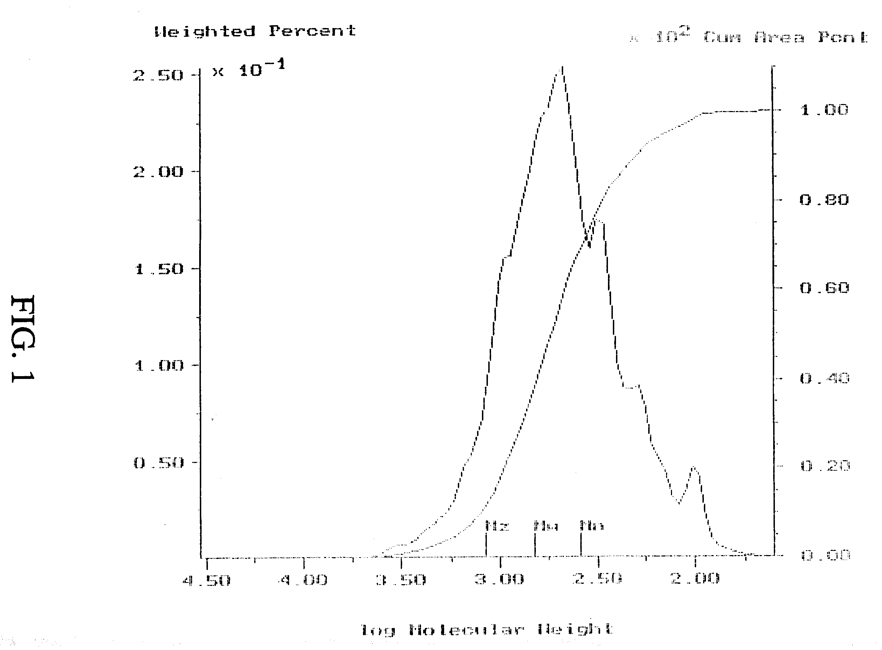

whereby the content of free amino acids < 15
Also, reference is made to Fig. 1, which shows the MW distribution of the freeze dried product.
Antigenicity tests were carried out, as indicated in the following.

Evaluation of the antigenicity of whey protein hydrolyzates by ELISA-test

1. Principle

The antigenicity of a whey protein hydrolyzate is tested by a modified double antibody sandwich ELISA. In this technique an antibody (catching antibody; from rabbit) is coated to a microtitre well. Then the sample containing the antigen is added. Subsequently an antibody (detecting antibody; from guinea pig) is added to form the sandwich antibody-antigen-antibody. Quantitation is carried out by reaction with a peroxidase-labelled antibody to guinea pig (from rabbit) and addition of OPD (O-phenylenediamine hydrochloride). The yellow colour, that develops, is measured in an ELISA reader.

2. Description

The following samples were tested :

a) Lacprodan 80 - bovine whey protein (spray-dried powder; 77% protein)
b) Product from Example 1 - whey protein hydrolyzate (freeze-dried powder; 78.1% protein)

Each well of a microtitre plate is coated with catching antibody (rabbit antiserum to bovine whey protein; DAKO Z183) and washed. The samples are dissolved in buffer solution to a starting concentration of 4 μg/ml of Lacprodan 80 and 100 mg/ml of the product from Example 1. Twofold dilutions of the samples are added in duplicate to separate wells and incubated overnight at 4°C. Subsequently a washing is performed. To each well is added detection antibody (guinea pig antiserum to bovine whey protein; prepared by means of Lacprodan 80 as protein source) and washed. To each well is added peroxidase conjugated rabbit antiserum to guinea pig serum (DAKO P141) and washed. The wells are developed by addition of OPD (O-phenylenediamine hydrochloride) and the yellow colour is measured by reading the absorbance at 492 nm.

3. Result

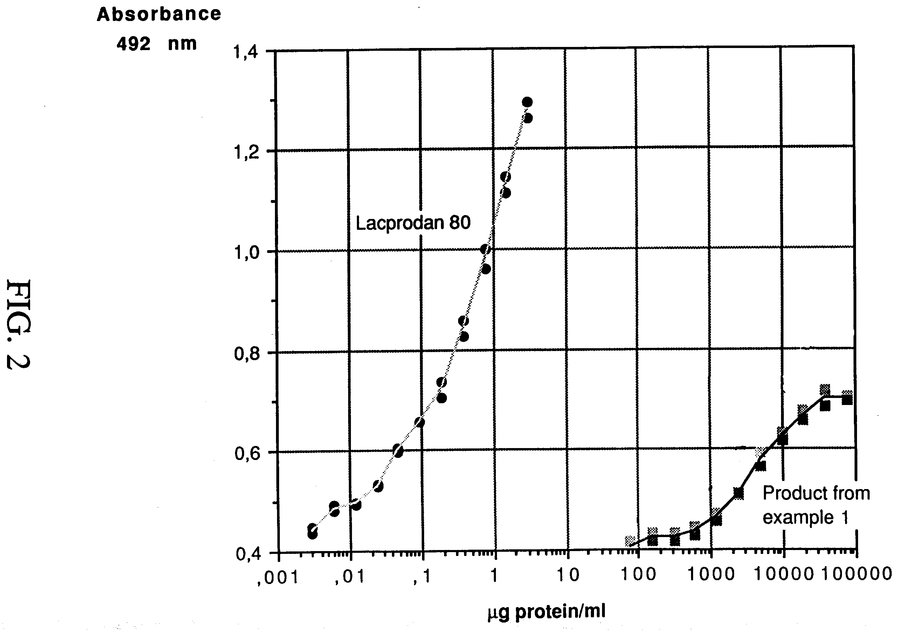

The result is given in Fig. 2, showing the measured absorbance at 492 nm for different protein concentrations in μg/ml. From the curves it appears that the product from Example 1 has a remarkable reduced antigenicity. By comparing the protein concentrations to give similar absorbance, the reduction in antigenicity can be estimated: The antigenicity of the product from Example 1 is reduced approximately $1.7 \times 10^5$ times compared to Lacprodan 80.

Evaluation of the antigenicity of whey protein hydrolyzates by testing for reactivity with milk specific IgE

In this test the reduction in antigenicity is measured relatively to skim milk powder.

**Test sera**

Two serum samples from children allergic to cow's milk were used: KG and LV.
Both of the two donors were highly allergic to cow's milk as proven by DBPCFC. Sera from the donors had previously been tested for specific IgE to cow's milk, and were found to be positive.
As negative control serum was used a "1000-donor pool", prepared from sera without IgE reactivity to ordinary inhalation allergens (Poulsen & Weeke, 1985).

**Allergens**

1. Whey protein hydrolyzate produced according to this example.
2. Commercial mother milk substitute, Nutramigen, 13.0% protein
3. Skim milk powder, 37% protein

**Inhibition experiments**

By means of Maxisorp RAST (Poulsen et al., 1989) dose-response curves for varying concentrations of skim milk were made. A concentration of 1 mg/ml was used. Serum dilution experiments demonstrated that both sera could be diluted 1:10 for inhibition experiments, giving a final concentration of 1:20.
All antigens were run in dilution series giving final concentrations of 50 mg/ml, 5 mg/ml, 500 μl/ml, 50 μl/ml, 5 μl/ml

and 500 ng/ml. Inhibition is expressed as

$$\% \ inhibition = 100 * \frac{response_{uninhib} - response_{inhib}}{response_{uninhib} - response_{control}}$$

The inhibitory activities of the hydrolyzed products were compared and expressed relative to skim milk by calculating the horizontal distance between inhibition curves for the same serum. As inhibition curves were not always parallel, this distance was calculated as close as possible to 50% inhibition.

Results

Table 1

| IgE reactivity to the test products. The results are expressed in relation to skim milk powder | | | |
|---|---|---|---|
| Antigen | % protein | Serum KG | Serum LV |
| Skim milk powder | 37.0 | 1 | 1 |
| Nutramigen | 13.0 | $<<2.8 \cdot 10^{-5}$ | $1.5 \cdot 10^{-4}$ |
| Product from Example 1 | 78.1 | $<<4.7 \cdot 10^{-6}$ | $1.9 \cdot 10^{-5}$ |

This test also shows a very low antigenicity of the test product. It has been found that the IgE reactivity of the test product is even lower than the IgE reactivity of a well established commercial hypoallergenic product (Nutramigen). Further, if the difference in protein between Nutramigen and the test product is considered the reduction of antigenicity of the test product can be estimated to be at least 60 times better than Nutramigen.

References

1. Poulsen, L.K. & Weeke, B.
Aluminum Hydroxide adsorbed Allergens used in modified RAST (Al-RAST) Allergy, 40.: 405 - 416 (1985)

2. Poulsen, L.K.; Pedersen, M.F.; Malling, H.-J.; Soendergaard, I. & Weeke, B.
Maxisorp RAST. A sensitive method for detection of absolute quantities of antigen-specific human IgE.
Allergy, 44: 173 - 189 (1989)

**Claims**

1. Method for production of a whey protein hydrolyzate, characterized by the fact

   1) that whey protein obtained from production of acid precipitated casein is mixed with water to a slurry with a protein content up to 20%, preferably up to 12%,
   2) that a heat treatment to a temperature above 60°C is carried out,
   3) that the mixture from step 2) is proteolytically hydrolyzed by means of at least one protease, by means of a non-pH-stat method to a DH of between 15 and 35%, and
   4) that the hydrolysis is terminated by inactivation of the enzyme(s), and further that the mixture from step 3) or 4) is separated on an ultrafiltration/microfiltration unit with cut-off value above 10,000, preferably above 50,000, the permeate constituting the protein hydrolyzate.

2. Method according to Claim 1, characterized by the fact that the slurry in step 1) has a protein content of 7-12%.

3. Method according to Claims 1 - 2, characterized by the fact that a pH adjustment in step 3) is carried out by means of $Ca(OH)_2$ and/or KOH.

4. Method according to Claims 1 - 3, characterized by the fact that the hydrolysis in step 3) is carried out to a DH of between 20-35%.

EP 0 642 307 B1

5. Method according to Claims 1 - 4, characterized by the fact that a protease producible by means of *B. licheniformis*, preferably Alcalase®, and/or a protease producible by means of *B. subtilis*, preferably Neutrase®, and/or trypsin is used as proteolytic enzyme(s).

6. Method according to Claims 1 - 5, characterized by the fact that the inactivation of the enzyme(s) (step 4)) is carried out by heat treatment.

7. Method according to Claims 1 - 5, characterized by the fact that the inactivation of the enzyme(s) (step 4)) is carried out by acid treatment.

8. Method according to Claims 1 - 7, characterized by the fact that the mixture at the end of step 3) or step 4) is treated with activated carbon for more than 5 minutes at a temperature, which is preferably between 50 and 70°C in an amount corresponding to between 1 and 5% carbon, calculated in relation to dry matter content, and that the activated carbon is removed.

9. Method according to Claims 1 - 8, characterized by the fact that after step 4) a concentration is carried out by nanofiltration/hyperfiltration/reverse osmosis at a temperature, which is preferably between 50 and 70°C and/or evaporation, whereafter the retentate is collected as the protein hydrolyzate solution.

10. Method according to Claims 1 - 9, characterized by the fact that the protein hydrolyzate solution from step 4) is spray-dried to a water content below 6.5%.

11. Whey protein hydrolyzate, characterized by the fact that it is producible according to Claims 1 - 10, and that it exhibits the following MW distributions.

|  | Weight-% |
|---|---|
| MW > 5000 | < 0.5 |
| 1500 < MW < 5000 | 5 - 15 |
| 500 < MW < 1500 | 40 - 60 |
| MW < 500 | 40 - 60 |

whereby the content of free amino acids < 15.

12. Whey protein hydrolyzate, characterized by the fact that it is producible on the basis of a starting material which is whey from acidic precipitated casein, that it exhibits the following MW distributions

|  | Weight-% |
|---|---|
| MW > 5000 | < 0.5 |
| 1500 < MW < 5000 | 5 - 15 |
| 500 < MW < 1500 | 40 - 60 |
| MW < 500 | 40 - 60 |

whereby the content of free amino acids < 15, and that it exhibits a reduction of antigenicity compared to Lacprodan 80 of at least $10^5$ times.

**Patentansprüche**

1. Verfahren zur Herstellung eines Molkeproteinhydrolysats, dadurch gekennzeichnet, daß

    1) Molkeprotein, das bei der Herstellung von säuregefälltem Casein erhalten worden ist, mit Wasser zu einer

8

Aufschlämmung mit einem Proteingehalt bis zu 20% und vorzugsweise bis zu 12% vermischt wird,

2) eine Wärmebehandlung auf eine Temperatur über 60°C durchgeführt wird,

3) das Gemisch von Stufe 2) proteolytisch mit mindestens einer Protease durch ein Nicht-pH-Stat-Verfahren auf einen DH-Wert von 15 bis 35% hydrolysiert wird und

4) die Hydrolyse durch Inaktivierung des oder der Enzyme beendet wird und das Gemisch von Stufe 3) oder 4) in einer Ultrafiltrations/Mikrofiltrations-Einheit mit einer Trenngrenze über 10 000 und vorzugsweise über 50 000 getrennt wird, wobei das Permeat das Proteinhydrolysat darstellt.

2. Verfahren nach Anspruch 1, dadurch gekennzeichnet, daß die Aufschlämmung in Stufe 1) einen Proteingehalt von 7-12% aufweist.

3. Verfahren nach Anspruch 1-2, dadurch gekennzeichnet, daß eine pH-Einstellung in Stufe 3) mit $Ca(OH)_2$ und/oder KOH durchgeführt wird.

4. Verfahren nach Anspruch 1-3, dadurch gekennzeichnet, daß die Hydrolyse in Stufe 3) bis zu einem DH-Wert von 20-35% durchgeführt wird.

5. Verfahren nach Anspruch 1-4, dadurch gekennzeichnet, daß eine Protease, die durch B. licheniformis gebildet werden kann, vorzugsweise Alcalase[R], und/oder eine Protease, die durch B. subtilis gebildet werden kann, vorzugsweise Neutrase[R], und/oder Trypsin als proteolytische Enzyme verwendet werden.

6. Verfahren nach Anspruch 1-5, dadurch gekennzeichnet, daß die Inaktivierung des oder der Enzyme (Stufe 4)) durch eine Wärmebehandlung durchgeführt wird.

7. Verfahren nach Anspruch 1-5, dadurch gekennzeichnet, daß die Inaktivierung des oder der Enzyme (Stufe 4)) durch Säurebehandlung durchgeführt wird.

8. Verfahren nach Anspruch 1-7, dadurch gekennzeichnet, daß das Gemisch am Ende von Stufe 3) oder Stufe 4) mit Aktivkohle mehr als 5 Minuten bei einer Temperatur, die vorzugsweise 50-70°C beträgt, in einer Menge von 1-5% Kohlenstoff, bezogen auf den Trockenmasseanteil, behandelt wird und daß die Aktivkohle entfernt wird.

9. Verfahren nach Anspruch 1-8, dadurch gekennzeichnet, daß nach der Stufe 4) eine Einengung durch Nanofiltration/Hyperfiltration/umgekehrte Osmose bei einer Temperatur, die vorzugsweise 50-70°C beträgt, und/oder durch Eindampfen vorgenommen wird, wonach das Retentat als Proteinhydrolysatlösung gewonnen wird.

10. Verfahren nach Anspruch 1-9, dadurch gekennzeichnet, daß die Proteinhydrolysatlösung von Stufe 4) auf einen Wassergehalt unter 6,5% sprühgetrocknet wird.

11. Molkeproteinhydrolysat, dadurch gekennzeichnet, daß es nach den Ansprüchen 1-10 herstellbar ist und die folgende Molekulargewichtsverteilung aufweist:

|  | Gew.-% |
|---|---|
| MG > 5000 | < 0,5 |
| 1500 < MG < 5000 | 5-15 |
| 500 < MG < 1500 | 40-60 |
| MG < 500 | 40 - 60 |

wobei der Anteil an freien Aminosäuren <15 ist.

12. Molkeproteinhydrolysat, dadurch gekennzeichnet, daß es aus einem Ausgangsmaterial herstellbar ist, bei dem es sich um bei der Säurefällung von Casein erhaltene Molke handelt, wobei es die folgende Molekulargewichtsverteilung aufweist:

|  | Gew.-% |
|---|---|
| MG > 5000 | < 0,5 |
| 1500 < MG < 5000 | 5-15 |
| 500 < MG < 1500 | 40-60 |
| MG < 500 | 40-60 |

wobei der Anteil der freien Aminosäuren <15 ist, und daß es eine Verringerung der Antigenizität im Vergleich zu Lacprodan 80 um mindestens das $10^5$-fache aufweist.

**Revendications**

1. Procédé d'obtention d'un hydrolysat de protéine de lactosérum caractérisé en ce que :

    1) on mélange la protéine de lactosérum obtenue à partir de la production de caséine précipitée à l'acide avec de l'eau selon une bouillie à teneur en protéine allant jusqu'à 20 %, de préférence jusqu'à 12 %,
    2) on met en oeuvre un traitement thermique à une température supérieure à 60°C,
    3) on hydrolyse protéolytiquement le mélange de l'étape 2) au moyen d'au moins une protéase au moyen d'un procédé à pH non fixe jusqu'à un DH compris entre 15 et 35 %, et
    4) on termine l'hydrolyse par inactivation de ou des enzymes et, en outre, on sépare le mélange de l'étape 3) ou 4) sur une unité d'ultrafiltration/microfiltration avec une valeur de coupure supérieure à 10 000, de préférence supérieure à 50 000, le perméat constituant l'hydrolysat de protéine.

2. Procédé selon la revendication 1 caractérisé en ce que la bouillie dans l'étape 1) a une teneur en protéine de 7 à 12 %.

3. Procédé selon les revendications 1-2, caractérisé en ce qu'on met en oeuvre le réglage du pH dans l'étape 3) au moyen de $Ca(OH)_2$ et/ou KOH.

4. Procédé selon les revendications 1-3, caractérisé en ce qu'on met en oeuvre l'hydrolyse dans l'étape 3) à un DH compris entre 20-35 %.

5. Procédé selon les revendications 1-4, caractérisé en ce qu'on utilise comme enzyme(s) protéolytique(s) une protéase susceptible d'être produite au moyen de B. licheniformis, de préférence Alcalase[®] et/ou une protéase susceptible d'être produite au moyen de B. subtilis, de préférence Neutrase[®] et/ou la trypsine.

6. Procédé selon les revendications 1-5, caractérisé en ce qu'on met en oeuvre l'inactivation de ou des enzymes (étape 4) par traitement thermique.

7. Procédé selon les revendications 1-5, caractérisé en ce qu'on met en oeuvre l'inactivation de ou des enzyme(s) (étape 4) par traitement à l'acide.

8. Procédé selon les revendications 1-7, caractérisé en ce qu'on traite le mélange à la fin de l'étape 3) ou de l'étape 4) avec du carbone activé pendant plus de 5 minutes à une température qui est de préférence située entre 50 et 70°C selon une quantité correspondant à une valeur comprise entre 1 et 5 % de carbone calculé par rapport à la teneur de matière sèche et en ce qu'on élimine le carbone activé.

9. Procédé selon les revendications 1-8, caractérisé en ce qu'on met en oeuvre après l'étape 4) une concentration par osmose inverse/nanofiltration/hyperfiltration à une température qui est de préférence située entre 50 et 70°C et/ou une évaporation après quoi on recueille le rétentat comme la solution d'hydrolysat de protéine.

10. Procédé selon les revendications 1-9, caractérisé en ce qu'on sèche par projection la solution d'hydrolysat de protéine de l'étape 4) jusqu'à une teneur en eau inférieure à 6,5 %.

**11.** Hydrolysat de protéine de lactosérum caractérisé en ce qu'il est susceptible d'être produit selon les revendications 1-10 et en ce qu'il présente les répartitions de poids moléculaire suivantes :

|  | % en poids |
|---|---|
| PM > 5000 | < 0,5 |
| 1500 < PM < 5000 | 5- 15 |
| 500 < PM < 1500 | 40 -60 |
| PM < 500 | 40 -60 |

où la teneur des acides aminés libres est < 15.

**12.** Hydrolysat de protéine de lactosérum caractérisé en ce qu'il est susceptible d'être produit à partir d'une matière de départ qui est du lactosérum de caséine précipitée à l'acide et en ce qu'il présente les répartitions de poids moléculaire suivantes :

|  | % en poids |
|---|---|
| PM > 5000 | < 0,5 |
| 1500 < PM < 5000 | 5 - 15 |
| 500 < PM < 1500 | 40 - 60 |
| PM < 500 | 40 - 60 |

où la teneur des acides aminés libres est < 15 et en ce qu'il présente une réduction de l'antigénécité comparativement au Lacprodan 80 d'au moins $10^5$ fois.

FIG. 1

FIG. 2

**Absorbance**
**492 nm**

Lacprodan 80

Product from example 1

μg protein/ml

EP 0 642 307 B1